# EUROPEAN PATENT SPECIFICATION

(11) **EP 3 961 172 B1**
(45) Date of publication and mention of the grant of the patent: **21.01.2026**
(21) Application number: 21191145.8
(22) Date of filing: 12.08.2021
(51) Int. Cl.: G01L 1/00, G01L 5/16

(54) **FORCE DETECTION DEVICE, FORCE DETECTION SYSTEM, AND MANUFACTURING METHOD OF FORCE DETECTION DEVICE**
KRAFTERFASSUNGSVORRICHTUNG UND -SYSTEM UND HERSTELLUNGSVERFAHREN EINER KRAFTERFASSUNGSVORRICHTUNG
DISPOSITIF DE DÉTECTION DE FORCE, SYSTÈME DE DÉTECTION DE FORCE ET PROCÉDÉ DE FABRICATION DE DISPOSITIF DE DÉTECTION DE FORCE

(30) Priority: 28.08.2020 JP 2020144899
(43) Date of publication of application: 02.03.2022
(73) Proprietor: YOKOGAWA ELECTRIC CORPORATION, Musashino-shi Tokyo 180-8750 (JP)
(72) Inventor: Nohno, Tomohito, Musashino-shi (JP)
(74) Representative: Osha BWB

(56) References cited:
- EP-A1- 3 650 824
- CN-A- 110 849 514
- CN-B- 110 849 514
- JP-A- 2012 021 869
- US-A1- 2015 192 482

## Description

### BACKGROUND

### Technical Field

The present invention generally relates to a force detection device, a force detection system, and a method for manufacturing a force detection device.

### Related Art

Conventionally, a force sensor is known that can detect, for example, touch. As a usage of the force sensor, a usage is known of, for example, equipping the force sensor to a hand of a robot and causing the hand of the robot to detect touch.

Individual force sensors are normally able to detect forces in one direction. However, it may be sought of the force sensor to detect a force in a multiaxial direction.

For example, patent literature 1 discloses a touch sensor device that can detect a force. The touch sensor device is provided with a plurality of touch sensor units, and each touch sensor unit is provided with four touch sensors that are arranged at 90-degree intervals on a plane. The touch sensor has a raised portion formed by being bent. Such a structure enables the touch sensor device according to patent literature 1 to detect a force in a multiaxial direction.

Patent literature 2 describes a strain gauge and multiple axis force sensor.

Patent literature 3 describes a high-performance rGO/CNF force electric sensor. Patent Literature 4 describes a sensor device array which has a sheet substrate with which the sensor devices are positioned and cuts are formed and the sheet substrate is embedded in an elastic body.

### Patent Literature

Patent Literature 1: JP 2008-26178 A
Patent Literature 2: EP 3650824 A1
Patent Literature 3: CN 110849514 A
Patent Literature 4: JP 2012-021869 A

### [Summary of Invention]

### [Problem to Be Solved by Invention]

The art taught in patent literature 1 is costly to manufacture because it has a complex structure formed by bending.

### SUMMARY

Aspects of the present disclosure provide a force detection device, a force detection system, and a manufacturing method of a force detection device whereby a force in a triaxial direction can be detected by a simple structure.

A force detection device according to the present disclosure is defined in claim 1. According to such a force detection device, a force in a triaxial direction can be detected by a simple structure.

By fixing the substrate in a randomly folded state, the plurality of force sensors disposed on the substrate can be oriented in a plurality of three-dimensional directions.

By arranging the plurality of force sensors on the substrate two-dimensionally, the force detection device can detect a detailed distribution of a force applied to the force detection device.

Since the substrate is a flexible substrate, the force detection device can have flexibility. This can prevent the substrate from breaking when the force detection device greatly deforms.

According to one or more embodiments, the fixing means may comprise or be a resin. In this manner, by the fixing means comprising or being a resin, the force detection device can have flexibility. According to one or more embodiments, the resin is selected from the group comprising a silicone resin, an acrylic resin, and a urethane resin.

A force detection system according to the present disclosure comprises the force detection device according to any of the embodiments herein described and a computation device. The computation device comprises a storage configured to store a calibration value calculated based on a force applied in advance to the force detection device and a controller configured to, based on the calibration value, calculate a force applied to the force detection device. In this manner, by the controller calculating the force applied to the force detection device based on the calibration value stored in the storage, the force detection system can calculate the force applied to the force detection device based on the calibration value calculated according to the force detection device.

A method for manufacturing a force detection device is defined in claim 5. According to such a manufacturing method of a force detection device, a force detection device that can detect a force in a triaxial direction by a simple structure can be easily manufactured.

According to one or more embodiments of the force detection device, system and manufacturing method, the substrate is fixed in the folded state by the fixing means comprising a fixing material, such as, for example, a resin.

### [Effects of Invention]

According to aspects of the present disclosure, a force detection device, a force detection system, and a manufacturing method of a force detection device are provided. In each of these aspects, a force in a triaxial direction can be detected by a simple structure.

### BRIEF DESCRIPTION OF THE DRAWINGS

FIG. 1 is a diagram illustrating a schematic configuration of a force detection system according to one or more embodiments.
FIG. 2 is a top view illustrating a schematic configuration of a force detection device according to one or more embodiments.
FIG. 3 is a sectional view illustrating the schematic configuration of the force detection device according to one or more embodiments.
FIG. 4 is a top view of a substrate in a state prior to folding.
FIG. 5 is a diagram illustrating one example of a force for calibration being applied to the force detection device.
FIG. 6 is a diagram illustrating one example of the force detection device measuring a force that is being applied.
FIG. 7 is a flowchart illustrating one example of a manufacturing process of the force detection device.

### DETAILED DESCRIPTION

Embodiments of the present invention will be described below with reference to the drawings.

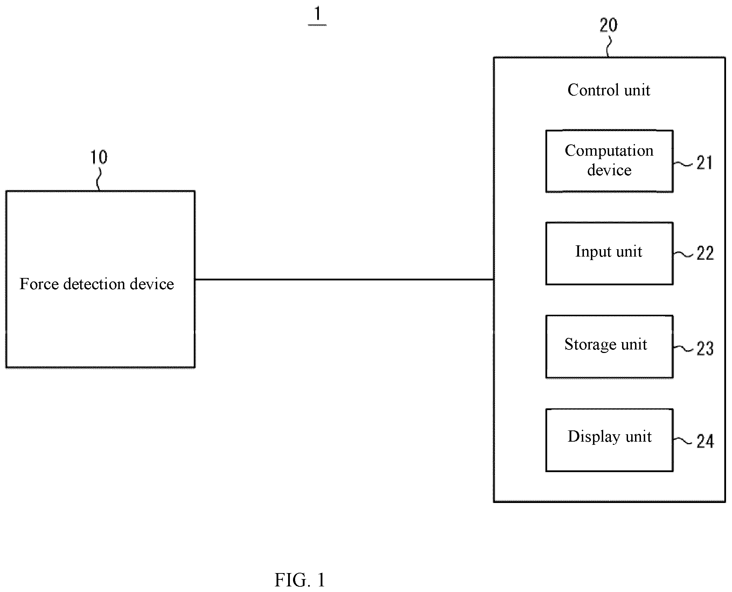

FIG. 1 is a diagram illustrating a schematic configuration of a force detection system 1 according to one or more embodiments. The force detection system 1 includes a force detection device 10 and a computation device 20.

The force detection device 10 is a device that can detect touch. That is, the force detection device 10 can detect a force applied to the force detection device 10. The force detection device 10 can detect a force in a triaxial direction. The force detection device 10 can detect a magnitude, orientation, and distribution of the force in the triaxial direction. The force detection device 10 is electrically connected to the computation device 20.

The computation device 20 calculates, based on a force applied to the force detection device 10 in advance, a calibration value for calibrating the force detection device 10. The computation device 20 stores the calculated calibration value. Upon storing the calibration value, the computation device 20 calibrates, based on the stored calibration value, a value detected by the force detection device 10 and calculates the force applied to the force detection device 10.

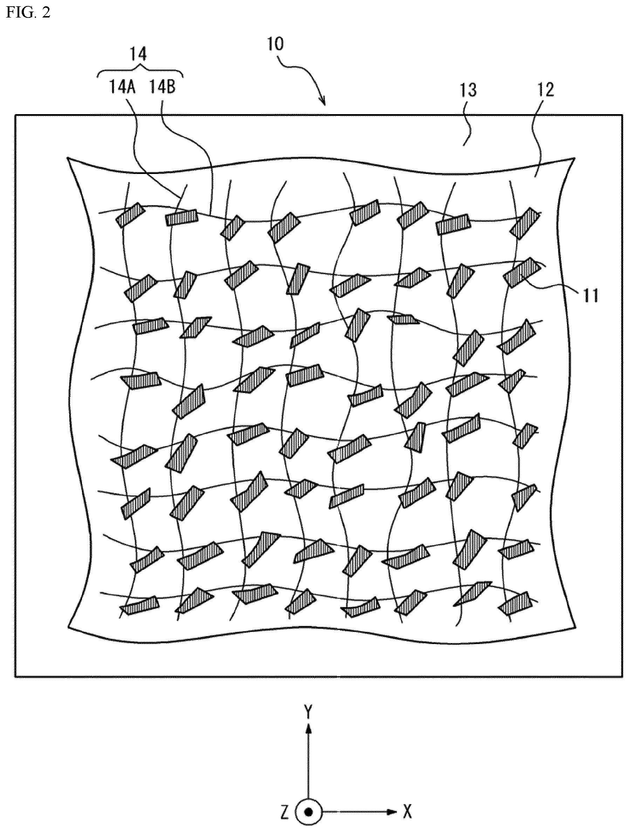

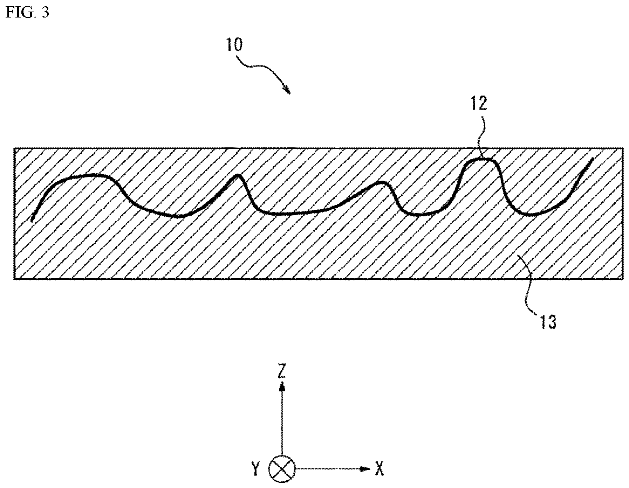

A schematic configuration of the force detection device 10 is described with reference to FIG. 2 and FIG. 3. FIG. 2 is a top view illustrating the schematic configuration of the force detection device 10 according to one or more embodiments. FIG. 3 is a sectional view illustrating the schematic configuration of the force detection device 10 according to one or more embodiments.

As illustrated in FIG. 2, the force detection device 10 includes a plurality of force sensors 11, a substrate 12, a fixing means 13, and wiring 14. In the example illustrated in FIG. 2, the wiring 14 includes vertical wiring 14A and horizontal wiring 14B. Note that in the sectional view of the force detection device 10 illustrated in FIG. 3, illustration of the force sensors 11 and the wiring 14 is omitted.

The force sensor 11 is a sensor that can detect a force applied to the force sensor 11. The force sensor 11 can detect a force in at least one direction. The force sensor 11 is a piezoresistive strain sensor or a capacitive strain sensor. The force sensor 11 is composed of a flexible material. The force sensor 11 may have flexibility and be deformable. When the force detection device 10 is equipped to, for example, a hand of a robot, the force sensor 11 can function as a touch sensor.

As illustrated in FIG. 2, the plurality of force sensors 11 is formed on the substrate 12. The plurality of force sensors 11 are formed on the substrate 12 by being arranged in a matrix.

The substrate 12 may be a tabular substrate that can be deformed by being folded. The substrate 12 is a flexible substrate. The substrate 12 being flexible enables easy folding. Moreover, the substrate 12 being flexible can prevent the substrate 12 from breaking when the force detection device 10 greatly deforms. The substrate 12 may be thin. The substrate 12 being thin enables the force detection device 10 to be reduced in size. The substrate 12 may be a film of, for example, plastic or rubber.

The substrate 12 may be originally tabular but is fixed in a folded state by the fixing means 13. The substrate 12 being fixed in the folded state by the fixing means 13 is schematically illustrated in FIG. 2 and FIG. 3.

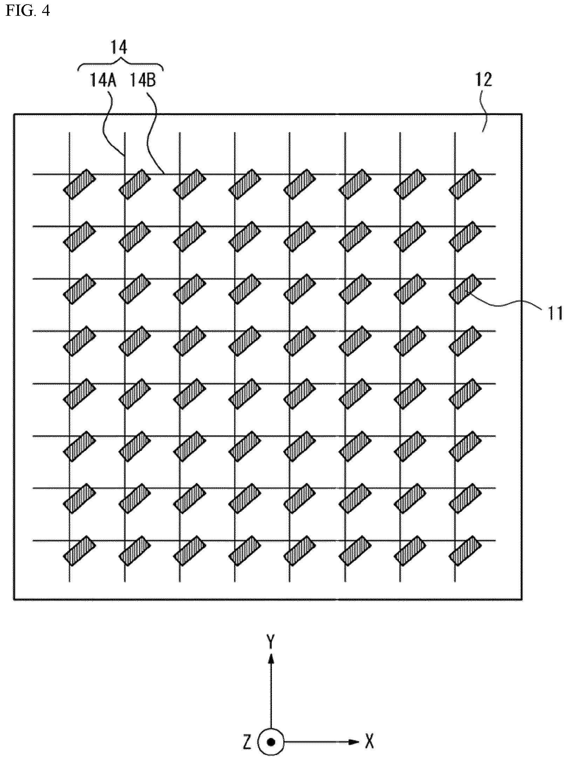

FIG. 4 is a diagram illustrating the substrate 12 in a state prior to folding. As illustrated in FIG. 4, the plurality of force sensors 11 is formed on the substrate 12 by being distributed two-dimensionally thereon. The plurality of force sensors 11 are arranged regularly- in a matrix-on the substrate 12 in the state prior to folding. By a tabular substrate 12 such as that illustrated in FIG. 4 being fixed in a folded state, the substrate 12 adopts, as one example, a shape such as that illustrated in the top view of FIG. 2 and the sectional view of FIG. 3.

In the present embodiment, the substrate 12 being folded means that the substrate 12 is deformed from being planar to having an uneven shape. The uneven shape of the substrate 12 may be formed by, for example, folds or wrinkles.

As illustrated in FIG. 2 and FIG. 3, because the fixing means 13 fixes the substrate 12 in the folded state, the plurality of force sensors 11 formed on the substrate 12 is oriented not in a uniform direction but in a plurality of three-dimensional directions. Therefore, the plurality of force sensors 11 can detect forces in a plurality of three-dimensional directions even if individual force sensors 11 can only detect forces in one direction. That is, the plurality of force sensors 11 can detect a force in a triaxial direction.

Furthermore, prior to being folded, the substrate 12 is a tabular substrate such as that illustrated in FIG. 4. As illustrated in FIG. 4, the plurality of force sensors 11 may be formed on the substrate 12 that is not yet folded by being arranged regularly thereon. Disposing the force sensors 11 on the substrate 12 in this manner by arranging them regularly thereon is possible by a simple process. For example, although it is conceivable to enable detection of forces in a plurality of directions by disposing a plurality of force sensors on a substrate by orienting each in a plurality of three-dimensional directions, such a manufacturing method involves a complex process and therefore raises manufacturing costs. In contrast, a manufacturing method, such as that of the force detection device 10 according to the present embodiment, of disposing the plurality of force sensors 11 on the substrate 12 that is not yet folded by arranging them regularly thereon in a one-dimensional or two-dimensional manner involves a simple process and can therefore lower manufacturing costs.

The substrate 12 are fixed by the fixing means 13 in a state of being randomly folded.

The fixing means 13 fixes the substrate 12 in the folded state. The fixing means 13 may comprise or be composed of a flexible material. The fixing means 13 may comprise or be, for example, a resin. The fixing means 13 may comprise or be, for example, a silicone resin, an acrylic resin, or a urethane resin. The substrate 12 may be placed inside the fixing means 13 in a folded state and thereafter be fixed by the fixing means 13 or be folded upon being placed in the fixing means 13 and thereafter be fixed by the fixing means 13. For example, when the fixing means 13 comprises a fixing material, the substrate 12 may be embedded in the fixing material in a folded state or be folded upon being embedded in the fixing material and thereafter be fixed by the fixing material, for example by curing.

The wiring 14 is wiring for extracting a signal output by the force sensor 11. The wiring 14 includes a conductor for transmitting an electrical signal. As illustrated in FIG. 2, for each force sensor 11, one end of the force sensor 11 is electrically connected to the vertical wiring 14A, and another end of the force sensor 11 is electrically connected to the horizontal wiring 14B.

As illustrated in FIG. 2, the wiring 14 connects the plurality of force sensors 11, arranged two-dimensionally on the substrate 12, in a matrix. The force detection device 10, by connecting the plurality of force sensors 11 in a matrix by the wiring 14 in this manner, decreases a wire count of the wiring 14 necessary to extract the signals output by the plurality of force sensors 11.

Next, a schematic configuration of the computation device 20 is described, once again with reference to FIG. 1. The computation device 20 includes an input unit 21, a storage unit 22 (storage), a display unit 23, and a control unit 24 (controller).

The input unit 21 includes an input interface that can accept a signal output by the force detection device 10. The input unit 21 is electrically connected to the force detection device 10. The input unit 21 accepts input of the signals output by the plurality of force sensors 11.

The storage unit 22 is, for example, a semiconductor memory, a magnetic memory, or an optical memory but is not limited thereto. The storage unit 22 may function as, for example, a main storage device, an auxiliary storage device, or a cache memory. The storage unit 22 stores any information used in an operation of the computation device 20. For example, the storage unit 22 may store various information and the like such as a system program and an application program.

The storage unit 22 stores the calibration value calculated based on the force applied in advance to the force detection device 10. Details of the calibration value stored in the storage unit 22 will be given below.

The display unit 23 displays various information. The display unit 23 may be, for example, a liquid-crystal display. The display unit 23 is not limited to a liquid-crystal display and may be, for example, an organic EL (electroluminescent) display.

The control unit 24 includes at least one processor, at least one dedicated circuit, or a combination thereof. The processor is a general-purpose processor such as a CPU (central processing unit) or a GPU (graphics processing unit) or a dedicated processor specialized for a specific process. The dedicated circuit is, for example, an FPGA (field-programmable gate array) or an ASIC (application-specific integrated circuit). The control unit 24 executes a process relating to an operation of the computation device 20 while controlling each unit of the computation device 20.

### (Calibration of Force Detection System)

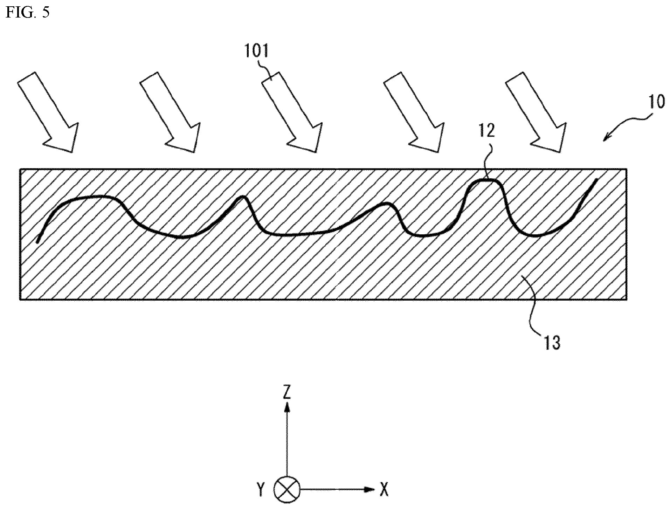

Calibration of the force detection system 1 is described with reference to FIG. 5 and the like. In the force detection device 10, the substrate 12 is fixed in the folded state by the fixing means 13. How the substrate 12 is folded and fixed by the fixing means 13 differs according to the individual force detection device 10. As such, what kind of outputting is performed by the force detection device 10 when a certain force is applied differs according to the individual force detection device 10.

Therefore, in the force detection system 1, the force detection device 10 is calibrated in advance, and the calculated calibration value is stored in the storage unit 22 of the computation device 20.

FIG. 5 illustrates one example of a force 101 being applied to the force detection device 10 for calibration. As illustrated in FIG. 5, when calibrating the force detection device 10, a force 101 of a specific magnitude and orientation distribution is applied to the force detection device 10.

The control unit 24 of the computation device 20 associates an output of the force detection device 10, from when the force 101 of the specific magnitude and orientation distribution is applied, with the magnitude and orientation distribution of the force 101 and stores these in the storage unit 22. Forces 101 of various magnitude and orientation distributions are applied to the force detection device 10. For each force 101 of these magnitude and orientation distributions, the control unit 24 of the computation device 20 associates the output of the force detection device 10 with the magnitude and orientation distribution of the force 101 and stores these in the storage unit 22.

The control unit 24 calculates the calibration value based on a plurality of data, stored in the storage unit 22, associating the output of the force detection device 10 and the magnitude and orientation distribution of the force 101. The control unit 24 may calculate the calibration value by, for example, performing machine learning or multivariate analysis. The control unit 24 stores the calculated calibration value in the storage unit 22.

### (Measurement of Force Applied to Force Detection Device)

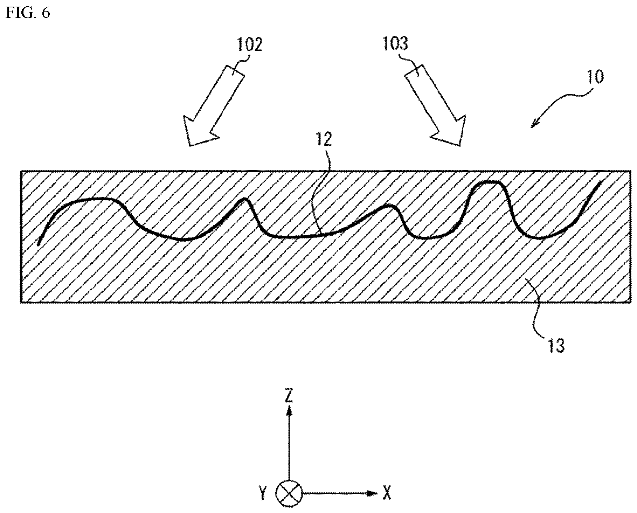

FIG. 6 illustrates a force detection device 10 for which the calibration value is already calculated detecting a force 102 and a force 103 that are applied.

When the force 102 and the force 103 are applied thereto, the force detection device 10 outputs a signal corresponding to the applied force.

The control unit 24 of the computation device 20, upon acquiring the signal output by the force detection device 10, calculates the force applied to the force detection device 10 based on the acquired signal and the calibration value for the force detection device 10 stored in the storage unit 22.

Because the force detection device 10 includes the plurality of force sensors 11 oriented in the plurality of three-dimensional directions, the control unit 24 of the computation device 20 can calculate a magnitude and orientation distribution of the force applied to the force detection device 10.

The control unit 24 may store the calculated magnitude and orientation distribution of the force applied to the force detection device 10 in the storage unit 22. Alternatively, the control unit 24 may display the calculated magnitude and orientation distribution of the force applied to the force detection device 10 on the display unit 23.

### (Manufacturing Method of Force Detection Device)

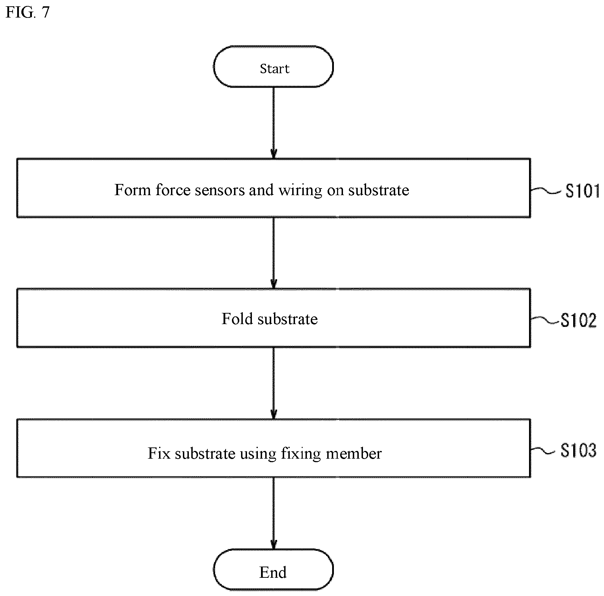

Next, one example of a manufacturing method of the force detection device 10 is described with reference to the flowchart illustrated in FIG. 7.

At step S101, the plurality of force sensors 11 and the wiring 14 are formed on the substrate 12.

At step S102, the substrate 12 is folded. The substrate 12 is folded randomly.

At step S103, the substrate 12 in the folded state is fixed by the fixing means 13. Note that the substrate 12 may be placed inside the fixing means13 in the folded state and thereafter be fixed by the fixing means 13 or be folded upon being placed in the fixing means 13 and thereafter be fixed by the fixing means 13.

In a force detection device 10 according to one or more embodiments such as that above, the plurality of force sensors **11** is formed on the substrate 12. Moreover, the fixing means 13 fixes the substrate 12 in the folded state. In this manner, by the substrate 12 whereon the plurality of force sensors **11** is formed being fixed by the fixing means 13 in the folded state, the plurality of force sensors **11** is oriented in a plurality of three-dimensional directions. As such, the force detection device 10 can detect a force in a triaxial direction even if individual force sensors **11** can only detect forces in one direction. Therefore, the force detection device 10 according to one or more embodiments can detect a force in a triaxial direction by a simple structure such as this.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

For example, arrangements, item counts, and the like of each component above are not limited to the description above and the content illustrated in the drawings. The arrangements, item counts, and the like of each component may be configured in any manner as long as the functions thereof can be realized.

Furthermore, although description in the present disclosure is centered around a device, the present disclosure can also be realized as a method including steps executed by each component of the device, a method executed by a processor provided in the device, a program, or a storage medium recording a program. It should be understood that the scope of the present disclosure also includes such.

The plurality of force sensors 11 is arranged in a matrix on the substrate 12. Since the arrangement of the plurality of force sensors 11 on the substrate 12 in the state prior to folding is made to be a regular arrangement in a matrix, the plurality of force sensors 11 can be formed in a high density on the substrate 12. As such, the force detection device 10 can detect the applied force at a high spatial resolution.

The wiring 14 connects the plurality of force sensors 11, arranged on the substrate 12, in a matrix. Since the wiring 14 connects the plurality of force sensors 11, arranged on the substrate 12, in a matrix, the wire count of the wiring 14 are decreased. As a result, the force detection device 10 can be reduced in size.

For example, although the above embodiment describes calibration of the force detection device 10, it is not essential to calibrate the force detection device 10. For example, when the substrate 12 is folded in a predetermined shape that is prescribed in advance, it is sufficient to store a theoretical value, a simulation value, or the like calculated for the predetermined shape prescribed in advance in the storage unit 22, without performing calibration.

For example, in the above embodiment, the substrate 12 is described as being a tabular substrate. However, the substrate 12 may be in the shape of a net or the like.

### [Description of Reference Signs]

- 1: Force detection system
- 10: Force detection device
- 11: Force sensor
- 12: Substrate
- 13: Fixing means
- 14: Wiring
- 14A: Vertical wiring
- 14B: Horizontal wiring
- 20: Computation device
- 21: Input unit
- 22: Storage unit
- 23: Display unit
- 24: Control unit

## Claims

1. A force detection device (10), comprising:
a substrate (12);
wiring (14) comprising a plurality of vertical wires (14A) and a plurality of horizontal wires (14B) arranged on the substrate (12);
a plurality of force sensors (11) arranged two-dimensionally on the substrate (12) and
connected in a matrix by the wiring (14),
wherein the plurality of force sensors (11) are piezoresistive strain sensors or capacitive strain sensors, and
wherein each force sensor of the plurality of force sensors (11) is electrically connected to a vertical wire of the plurality of vertical wires (14A) and a horizontal wire (14B) of the plurality of horizontal wires; and
a fixing means (13) configured to fix the substrate (12) therein in a randomly folded state.

2. The force detection device (10) according to claim 1, wherein the fixing means (13) is a resin.

3. The force detection device (10) according to claim 2, wherein the resin is selected from the group comprising a silicone resin, an acrylic resin, and a urethane resin.

4. A force detection system (1), comprising:
the force detection device (10) according to any one of claims 1-3; and
a computation device (20) comprising:
a storage (22) configured to store a calibration value calculated based on a force applied in advance to the force detection device (10); and
a controller (24) configured to, based on the calibration value, calculate a force applied to the force detection device (10).

5. A method for manufacturing a force detection device (10) as defined in any one of claims 1-3, the method comprising:
forming (S101) the plurality of force sensors (11) and the wiring (14) on the substrate (12); randomly folding (S102) the substrate (12); and
fixing (S103) the substrate (12) in the folded state by the fixing means (13).

## Patentansprüche

1. Krafterfassungsvorrichtung (10), umfassend:
ein Substrat (12);
Verdrahtung (14), die eine Mehrzahl von vertikalen Drähten (14A) und eine Mehrzahl von horizontalen Drähten (14B) umfasst, die auf dem Substrat (12) angeordnet sind;
eine Mehrzahl von Kraftsensoren (11), die zweidimensional auf dem Substrat (12) angeordnet und durch die Verdrahtung (14) in einer Matrix verbunden sind,
wobei die Mehrzahl von Kraftsensoren (11) piezoresistive Dehnungssensoren oder kapazitive Dehnungssensoren sind, und
wobei jeder Kraftsensor der Mehrzahl von Kraftsensoren (11) elektrisch mit einem vertikalen Draht der Mehrzahl von vertikalen Drähten (14A) und einem horizontalen Draht (14B) der Mehrzahl von horizontalen Drähten verbunden sind; und
ein Fixiermittel (13), das dazu ausgelegt ist, das Substrat (12) darin in einem zufällig gefalteten Zustand zu fixieren.

2. Krafterfassungsvorrichtung (10) nach Anspruch 1, wobei das Fixiermittel (13) ein Harz ist.

3. Krafterfassungsvorrichtung (10) nach Anspruch 2, wobei das Harz aus der Gruppe ausgewählt ist, die ein Silikonharz, ein Acrylharz und ein Urethanharz umfasst.

4. Krafterfassungssystem (1), umfassend:
die Krafterfassungsvorrichtung (10) nach einem der Ansprüche 1-3,
eine Rechenvorrichtung (20), die Folgendes umfasst:
einen Speicher (22), der dazu ausgelegt ist, einen Kalibrierwert zu speichern, der basierend auf einer Kraft berechnet wird, die vorab auf die Krafterfassungsvorrichtung (10) ausgeübt wird; und
eine Steuerung (24), die dazu ausgelegt ist, basierend auf dem Kalibrierwert eine Kraft zu berechnen, die auf die Krafterfassungsvorrichtung (10) ausgeübt wird.

5. Verfahren zur Herstellung einer Krafterfassungsvorrichtung (10) nach einem der Ansprüche 1-3, wobei das Verfahren Folgendes umfasst:
Bilden (S101) der Mehrzahl von Kraftsensoren (11) und der Verdrahtung (14) auf dem Substrat (12);
zufälliges Falten (S102) des Substrats (12); und
Fixieren (S103) des Substrats (12) im gefalteten Zustand durch das Fixiermittel (13).

## Revendications

1. Un dispositif de détection de force (10), comprenant :
un substrat (12) ;
des fils (14) comprenant une pluralité de fils verticaux (14A) et une pluralité de fils horizontaux (14B) disposés sur le substrat (12);
une pluralité de capteurs de force (11) disposés de manière bidimensionnelle sur le substrat (12) et reliés en matrice par les fils (14),
dans lequel la pluralité de capteurs de force (11) sont des capteurs de déformation piézorésistifs ou des capteurs de déformation capacitifs, et
dans lequel chaque capteur de force de la pluralité de capteurs de force (11) est connecté électriquement à un fil vertical de la pluralité de fils verticaux (14A) et à un fil horizontal (14B) de la pluralité de fils horizontaux ; et
un moyen de fixation (13) configuré pour y fixer le substrat (12) dans un état plié de façon aléatoire.

2. Le dispositif de détection de force (10) selon la revendication 1, dans lequel les moyens de fixation (13) sont une résine.

3. Le dispositif de détection de force (10) selon la revendication 2, dans lequel la résine est sélectionnée dans le groupe comprenant une résine de silicone, une résine acrylique et une résine uréthane.

4. Un système de détection de force (1), comprenant :
le dispositif de détection de force (10) selon l'une quelconque des revendications 1 à 3 ; et
un dispositif de calcul (20) comprenant :
un stockage (22) configuré pour stocker une valeur d'étalonnage calculée sur la base d'une force appliquée au préalable au dispositif de détection de force (10) ; et
un contrôleur (24) configuré pour, en fonction de la valeur d'étalonnage, calculer une force appliquée au dispositif de détection de force (10).

5. Un procédé de fabrication d'un dispositif de détection de force (10) tel que défini dans l'une quelconque des revendications 1-3, ledit procédé comprenant :
la formation (SIOI) de la pluralité de capteurs de force (11) et les fils (14) sur le substrat (12) ;
le pliage du substrat (12) de façon aléatoire (Sl02) ; et
la fixation (Sl03) du substrat (12) à l'état plié par les moyens de fixation (13).
